# EUROPEAN PATENT SPECIFICATION

(11) **EP 0 962 809 B1**
(45) Date of publication and mention of the grant of the patent: **30.03.2005**
(21) Application number: 99303612.8
(22) Date of filing: 10.05.1999
(51) Int. Cl.: G02F 1/37

(54) **A second harmonic wave-generation device**
Vorrichtung zur Erzeugung der zweiten harmonischen Welle
Dispositif pour la génération de la seconde harmonique

(30) Priority: 12.05.1998 JP 12875898
(43) Date of publication of application: 08.12.1999
(73) Proprietor: NGK INSULATORS, LTD., Nagoya-City, Aichi Prefecture 467-8530 (JP); PIONEER ELECTRONIC CORPORATION, Meguro-ku, Tokyo (JP)
(72) Inventor: Yoshino, Takashi, Oharu-Cho, Ama-Gun, Aichi Pref. (JP); Iwai, Makoto, Kasugai City, Aichi Pref. (JP); Kozuka, Yoshinari, Tenpaku-Ku, Nagoya-City, Aichi Pref. (JP); Chikuma, Kiyofumi, c/o Corporate Res. & Dev. Lab., Tsurugashima City, Saitama Pref. (JP); Onoe, Atsushi, c/o Corporate Res. & Dev. Lab., Tsurugashima City, Saitama Pref. (JP); Yoshida, Ayako, c/o Corporate Res. & Dev. Lab., Tsurugashima City, Saitama Pref. (JP)
(74) Representative: Paget, Hugh Charles Edward

(56) References cited:
- EP-A- 0 737 884
- US-A- 5 253 259
- US-A- 5 546 220
- PATENT ABSTRACTS OF JAPAN vol. 1995, no. 04, 31 May 1995 (1995-05-31) & JP 07 028111 A (MATSUSHITA ELECTRIC IND CO LTD), 31 January 1995 (1995-01-31)

## Description

### Background of the Invention

### Field of the Invention:

This invention relates to a second harmonic wave-generation (SHG) device, suitable for example for a device such as a blue laser source.

### Related Art Statement:

A device to generate a blue laser is suggested which is made by forming an optical waveguide having periodically polarization-inversed structure and in which an infrared semiconductor laser is introduced into the optical waveguide (USP 4,740,265, JP-A-5-289131, and JP-A-5-173213). For example, JP-A-6-51359 discloses a SHG device in which a polarization-inversed layer, an optical waveguide, a dielectric film, and a reflective grating layer are formed and a thickness of the dielectric film is defined into a given value.

Although these techniques require highly precise controlling of domains, it is very hard to do so. An allowable temperature for the phase-matching must be controlled within the precision range of ±0.5°C. Moreover light damage of the optical waveguide may be recognized at 3 mW and over of a light energy. Considering these phenomena, it is pointed out that these techniques have a problem as a practical device.

On the other hand, NGK Insulators, Ltd. suggested in JP-A-8-339002 a SHG device having little light damage without a quasi-phase-matching method or controlling domains at a high-precision.

The SHG device has a problem, however, that if the environmental temperature changes, a wavelength of a infrared laser entering the device and a phase-matched wavelength of the device fluctuate. Thus, even though a fundamental wave is phase-matched at one temperature, it is not if the environmental temperature change, so that the generating efficiency of a second harmonic wave remarkably decreases.

### Summary of the Invention

It is an object of the present invention to provide a second harmonic wave-generation device to generate a second harmonic wave from a fundamental wave in which the fundamental wave can be phase-matched to the second harmonic wave even if an environmental temperature change.

This invention relates to a second harmonic wave-generation device for generating a second harmonic wave from a fundamental wave comprising an optical waveguide for converting a wavelength made of a solid crystal of lithium potassium niobate-lithium potassium tantalate solid solution single crystal (or a niobate-tantalate solid solution single crystal having the same crystal structure), a reflective grating part for fixing a wavelength of the fundamental wave entering the wavelength-converting optical waveguide, and a temperature controlling means for controlling a temperature of at least the wavelength-converting optical waveguide, said fundamental wave being an ordinary ray, said second harmonic wave being an extraordinary ray, and said fundamental wave being converted to said second harmonic wave in the wavelength-converting optical waveguide.

The inventors paid attention to the fact that a single crystal made of lithium potassium niobate-lithium potassium tantalate solid solution (often called as "KLNT crystal", hereinafter) has a characteristic of converting a fundamental wave constituted from an ordinary ray into a second harmonic wave constituted from an extraordinary ray and the fact that the crystal having the specific composition has a large change in a refractive index of an extraordinary ray vs. the temperature change, for example, 5.5×10⁻⁴/°C, and ,on the contrary, has a very smaller change in a refractive index of an ordinary ray vs. the temperature change, for example, about 0.05×10⁻⁴/°C, than that of the ordinary ray. environmental temperature change, so that the generating efficiency of a second harmonic wave remarkably decreases.

EP-A 737 884 does not describe the features which appear in the characterising portion of Claim 1, but it discoses a prior art SHG device which includes all the other features of Claim 1 and 2.

### Summary of the Invention

It is an object of the present invention to provide a second harmonic wave-generation device to generate a second harmonic wave from a fundamental wave in which the fundamental wave can be phase-matched to the second harmonic wave even if an environmental temperature change.

This invention relates to a second harmonic wave-generation device as recited in Claim 1.

The inventors paid attention to the fact that a single crystal made of lithium potassium niobate-lithium potassium tantalate solid solution (often called as "KLNT crystal", hereinafter) has a characteristic of converting a fundamental wave constituted from an ordinary ray into a second harmonic wave constituted from an extraordinary ray and the fact that the crystal having the specific composition has a large change in a refractive index of an extraordinary ray vs. the temperature change, for example, 5.5×10⁻⁴/°C, and ,on the contrary, has a very smaller change in a refractive index of an ordinary ray vs. the temperature change, for example, about 0.05×10⁻⁴/°C, than that of the ordinary ray.

The inventors have conceived to combine the above characteristic with a reflective grating, fix a wavelength of the ordinary ray (fundamental wave) with the reflective grating part, and at the same time, control a temperature in at least an optical waveguide for converting a wavelength with a temperature controlling means such as a film heater. Consequently it is possible for the reflective grating part to fix a frequency of the ordinary ray (fundamental wave) in a very small range. Change in the frequency of the fundamental wave can be made smaller even if the environmental temperature considerably changes. At the same time, it is possible to change and control the refractive index of an extraordinary ray in the optical waveguide by working the temperature controlling means for the wavelength-converting optical waveguide.

Consequently, even with large change of an environmental temperature and a special condition of conspicuous low temperature or conspicuous high temperature, it is possible to dynamically control the wavelength of the second harmonic wave and optimize an output thereof as well as to make smaller the wavelength change in the fundamental wave fixed by the reflective grating part.

By the way, JP-A-5-53163 discloses an optical wavelength-converting-device of a quasi phase-matched type which has a periodically polarization-inversed layer and an optical waveguide, and in which a film heater is formed on the optical waveguide. It does not aim at utilizing the difference in the temperature change of the refractive index between of an ordinary ray and an extraordinary ray of the specified material as in the present invention, using the ordinary ray as a fundamental wave, fixing its wavelength with the reflective grating part, at the same time, taking the extraordinary ray as a second harmonic wave, and controlling the wavelength of the second harmonic wave with the film heater.

The second harmonic wave-generation device according to the present invention can generate a laser in a range of 390 nm to 470 nm. Thus, it can be widely applied for optical disk memory, a medicine uses, an optochemical uses, various optical measurements, etc. by using such a laser having a short wavelength.

### Brief Description of the Drawings

For a better understanding of this invention, reference is made to the attached drawings, wherein:
Fig. 1 is a plan view schematically showing a part of a preferred embodiment of a second harmonic wave-generation device 1 of the present invention,
Fig. 2 is a side view schematically showing another preferred embodiment of the second harmonic wave-generation device 1,
Fig. 3(a) is a perspective view showing a cut away part of a wave converting optical waveguide in an enlarged size,
Fig. 3(b) is a perspective view showing the same part of Fig. 3(a) as not cut away,
Fig. 4 is a transverse sectional view of Fig. 3(b),and
Fig. 5 is a plan view showing a second harmonic wave-generation device having a first substrate and a second substrate.

### Detailed Description of Preferred Embodiments

As the above single crystal for the wavelength-converting optical waveguide, a single crystal having a fundamental composition of K₃Li₂₋₂ₐ(Nb_{1-b}Ta_{b})_{5+5c}O_{15-a+12.5c} (herein, -0.5≤a≤0.625, 0≤b≤0.5, 0.8≤(5-2a)/(5+5c)≤1.2) may be particularly preferably used, but another single crystal having a different composition from the above one may be used.

The wavelength-converting optical waveguide is preferably composed of an epitaxial layer formed on a surface of a single crystal substrate. The single crystal substrate is particularly preferably composed of a single crystal having a fundamental composition of K₃Li₂₋₂ₓ(Nb_{1-y}Ta_{y})_{5+5z}O_{15-x+12.5z} (herein, -0.5≤x≤0.625, 0≤y≤0.5, 0.8≤(5-2x)/(5+5z)≤1.2).

The term of 0.8≤(5-2x)/(5+5z) or (5-2a)/(5+5c)<1.2 may be rewritten as (-1-2x)/6≤z≤(1-2x)/4 or (-1-2a)/6 ≤c≤(1-2a)/4, respectively.

The above single crystal substrate is preferably made by a micro pull-down method suggested in the specification of Japanese Patent Application No. 7-62586 and Japanese Patent Application No. 7-62585 by the inventors of the present invention.

The reason why the composition in the above KLN material is -0.5≤a, x≤0.625 is that the KLN material may take a tungsten bronze structure. If the amount of potassium in the KLN material is larger than that in the KLN material having the composition of -0.5≤a, x≤0.625, the KLN material become an ortho rhombic system of KNbO₃. If the amount of lithium in the KLN material is larger than that in the KLN material having the above composition, the KLN material become a hexagonal system of LiNbO₃.

The reason why the composition in the above KLN material is 0≤b, y≤0.5 is that the Curie Temperature decreases as the amount of substituted Ta therein increases, and the Curie Temperature is nearby room temperature if b,y=0.5, so that the KLN material does not become a ferroelectrics to generate no second harmonic wave.

The composition range of 0.8≤(5-2a)/(5+5c), (5-2x)/(5+5z)≤1.2 represent a range in which the single crystal having only the tungsten bronze structure can be obtained by controlling the ratio of (K+Li) to (Nb+Ta) in the pull-down method. The composition range, in which a uniform single crystal ca be grown, is wider than that attainable by a chiro-porous method.

Furthermore, an intermediate layer of the KLNT single crystal falling in the above composition range may be formed between the single crystal substrate and the wavelength-converting optical waveguide. It is required that the relation in the refractive index between the single crystal substrate and the wavelength-converting optical waveguide, or the relation in the refractive index between the intermediate layer and the wavelength-converting optical waveguide enables a light wave to be confined into the waveguide.

As the fundamental composition of the wavelength-converting optical waveguide, the single crystal substrate, and the intermediate layer, the above material having the tungsten bronze structure ,made of K, Li, Nb, Ta, O element may be employed, but it is possible to substitute the element(s), for example to substitute Na, Rb, or the like for K, Li, or to dope a laser-generating doping element such as Cr, a rare earth series element of Er, Nd, or the like as far as the material maintains this structure.

In the KLN composition or the KLNT composition, the refractive index of an extraordinary ray in the single crystal decreases as the amount of substituted Ta increases. That is, the refractive index of an ordinary ray in the single crystal decreases as the value of b or y increases. Moreover in the KLN composition, the refractive index of an extraordinary ray in the single crystal increases as the amount of Nb in the material increases, that is, as the value of c, or, z increases.

As the temperature controlling means for the wavelength-converting optical waveguide, a film heater is preferred, but an outside heater may be used. However, the whole optical waveguide can be uniformly heated by small electric power by setting the film heater on the wavelength-converting optical waveguide.

In a particularly preferred embodiment in the present invention, a second harmonic wave-generation device includes an integral substrate, and a wavelength-converting optical waveguide and a reflective grating part are formed on the substrate. Thereby, they can be unified on the same substrate.

Furthermore, in the embodiment, the film heater may be particularly preferably formed on the reflective grating layer, too. Thereby, the second harmonic wave-generation device can be made smaller and the cost for manufacturing the device can be reduced. In that case, although the reflective grating part is also heated, the wavelength of the fundamental wave fixed at the reflective grating part does not almost fluctuate, according to the present invention, due to remarkably smaller change of a refractive index of an ordinary ray than that of an extraordinary ray in the KLN crystal composing the optical waveguide. Thus, the special construction can be first realized according to the present invention.

Moreover, a dielectric layer may be particularly favorably formed between the film heater and the wavelength-converting optical waveguide.

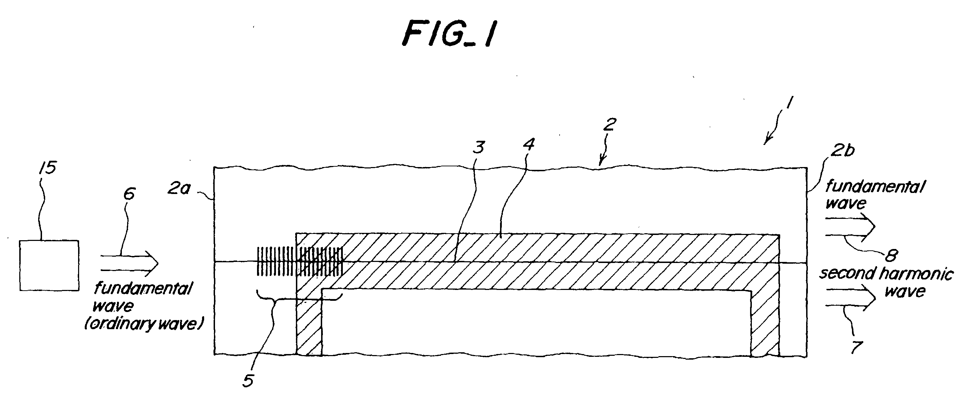

Fig. 1 to Fig. 4 show an embodiment in which the reflective grating part and the wavelength-converting optical waveguide are formed on the same substrate. Fig. 1 is a plan view schematically showing a part of a second harmonic wave-generation device 1 in this embodiment.

The second harmonic wave-generation device 1 has a rectangular parallelepiped substrate 2, for example. The substrate 2 is preferably made of a KLNT single crystal, for example, falling in the above composition range. A wavelength-converting optical waveguide 3 and a reflective grating part 5 are formed on the surface of the substrate 2, and a film heater 4 is formed on the wavelength-converting optical waveguide 3 and the reflective grating part 5. Hereupon, Fig. 1 show the positions of the wavelength-converting optical waveguide 3, the film heater 4, and the reflective grating part 5 in plane. A numerical number 15 denotes a laser source.

A fundamental wave (an ordinary ray) 6 enters the second harmonic wave-generation device 1 from an incident end 2a of the substrate 2. Thereafter, the fundamental wave 6 enters the optical waveguide 3 and passes the reflective grating part 5. During the fundamental wave passing the part 5, the wavelength of the fundamental wave is fixed with returning its light wave from the part 5. Since the refractive index of an ordinary ray in the optical waveguide 3 under the reflective grating part 5 does not almost change when the heater 4 generates a heat, the intensity of the light wave with the fixed wavelength is only slightly influenced. Moreover, the refractive index of an extraordinary ray in the optical waveguide 3 can be increased by working the film heater 4. Thereby, a phase-matching can be controlled dynamically, and an output of a second harmonic wave 7 can be increased and optimized. A numerical number 8 denotes an ordinary ray leaving from an end 2b of the substrate.

For example, if the environmental temperature decreases, the entire temperature in the optical waveguide 3 decreases and the refractive index of the extraordinary ray decreases not to phase-match the wavelength of the second harmonic wave with the fundamental wave, even though the heating value of the film heater 4 is constant. If the decrease of the output of the second harmonic wave is detected, the voltage to the film heater is increased, which can increase the entire temperature in the optical waveguide and thereby the refractive index of an extraordinary ray. If the temperature in the wavelength-converting optical waveguide at which the wavelength of the fundamental wave matches that of the second harmonic wave, is lower than the environmental temperature, it is likely to be difficult to carry out the above controlling method. Thus, the temperature in the wavelength-converting optical waveguide at which the wavelength of the fundamental wave matches that of the second harmonic wave, is preferably higher than a maximum use temperature during using the device by 10°C and over.

On the other hand, a heat-absorbing member as a Peltier element may be provided instead of the film heater. If the temperature in the wavelength-converting optical waveguide deviates the temperature in which the fundamental wave phase-matches the second harmonic wave, the Peltier element is operated so that the optical waveguide's temperature may return to the phase-matching temperature.

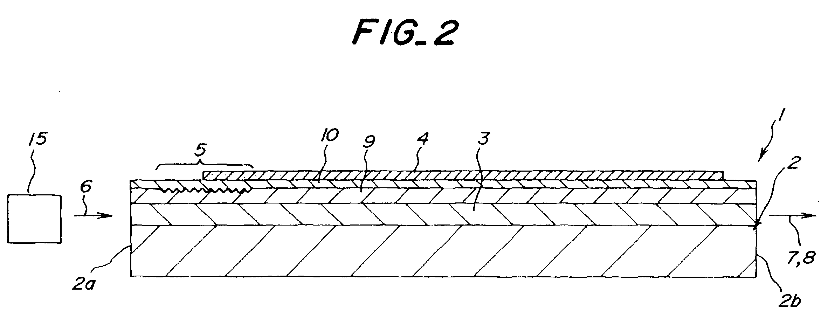

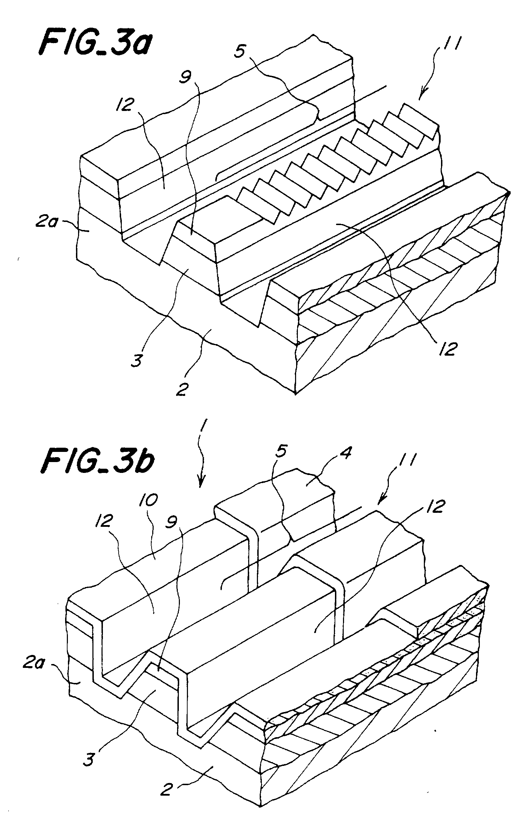

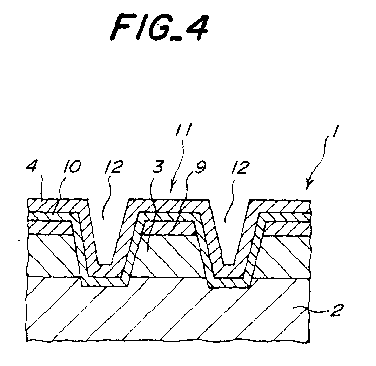

A preferred embodiment of the device 1 as shown in Fig. 1 will be described, referring to Fig. 2 to Fig. 4. Fig. 2 to Fig. 4 show one configure of device 1 in Fig. 1, Fig. 2 being a side view schematically showing the second harmonic wave-generation device 1, Fig. 3(a) being a perspective view showing a cut away part of the wavelength-converting optical waveguide in an enlarged scale, Fig. 3(b) is a perspective view, as not cut away, showing the same part in Fig. 3(a), and Fig. 4 is a transverse sectional view of Fig. 3(b).

A ridge-type wavelength-converting optical waveguide 3 is formed on a surface of a single crystal substrate 2, and an overclad layer 9 is formed on the upper surface of the optical waveguide 3. These layers may be formed by a metalorganic vapor phase epitaxial method or a liquid phase epitaxial method. Ditches forming a diffraction grating at a uniform period are formed in an upper surface portion of the overclad layer 9 by reactive ion etching, for example, to compose the reflective grating part 5.

A dielectric layer 10 is formed to cover the ridge-type optical waveguide and the overclad layer. A film heater 4 is formed in a given area on the dielectric layer 10. A ridge structure 11 is composed of the wavelength converting optical waveguide 3, the overclad layer 9, and the dielectric layer 10, and slender ditches 12 are formed in both the sides of the ridge structure 11.

Although a material composing the dielectric layer is not limited, Ta₂O₅, SiO₂, TiO₂, HfO₂, or Nb₂O₅ is preferably employed. As a material composing the film heater, Ni, Ti, Ta, Pt, or Cr is preferably employed. Instead of the film heater, a Peltier element may be used.

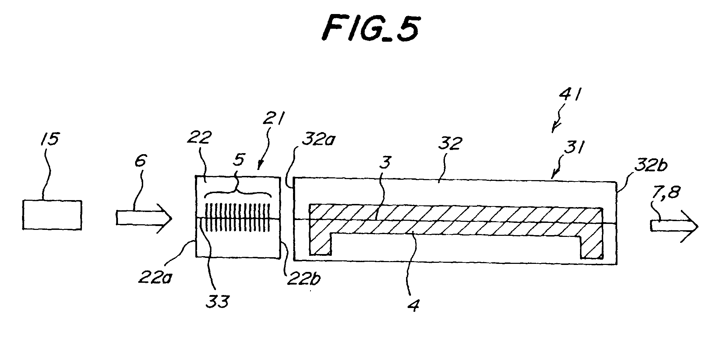

In an embodiment of the second harmonic wave-generation device according to the present invention, the device has a first substrate and a second substrate, the reflective grating part is formed on the first substrate, and the wavelength-converting optical waveguide and the temperature controlling means are formed on the second substrate. Fig. 5 is a plan view schematically showing a device 41 of this embodiment.

The device has a wavelength fixing part 21 and a wavelength-converting part 31. The wavelength fixing part 21 has the first substrate 22, on which the reflective grating part 5, which fixes a wavelength of a laser passing through an optical waveguide 33, is formed.

The wavelength-converting part 31 has the second substrate 32, on which the wavelength-converting optical waveguide 3 and the film heater 4 are formed. Reference numerals 22a and 22b denote each of ends of the first substrate 22, respectively, and reference numerals 32a and 32b denote each of ends of the second substrate 32, respectively.

### Example:

The invention will be explained in more detail with reference to the following examples.

### Example

### (Production of a second harmonic wave-generation device)

In this example, a device 1 was formed as shown in Figs. 2 to 4.

Powdery potassium carbonate, lithium carbonate, niobium oxide, and tantalum oxide was mixed in a composition ratio of 30:20:40:10 to obtain a powdery raw material. About 50 g of the powdery raw material was put into a crucible made of platinum and the crucible was set in a given position in a furnace. The powdery raw material in the crucible was melted, while an upper side of the furnace was controlled to a temperature range of 1100°C to 1200°C. A single crystal substrate having a "C" crystal face was pulled-down in a direction of an "a" axis thereof at the rate of 20mm/hour, while the temperature of a single crystal growing part is set to a range of 1050°C to 1150°C. Consequently, the KLNT single crystal substrate 2 having a "C" crystal face with the thickness of 1mm and the width of 30 mm was successfully obtained. The composition was K₃Li_{1.95}(Nb_{0.98}Ta_{0.02})_{5.05}O₁₅.

Then, an epitaxial film having a composition of K₃Li_{1.9}Nb_{5.1}O₁₅ was formed on the single crystal substrate by the metalorganic vapor phase epitaxial method. The film-forming conditions were that the temperature of the single crystal substrate was 750°C, that the pressure in a reacting tube was 20 Torr, and that the film-forming rate was 0.8 µm/hour. Thereby, an epitaxial film 3 with the thickness of 2.5 µm was obtained. Under the same conditions as above mentioned, an overclad layer 9 having a composition of K₃Li_{1.95}(Nb_{0.98}Ta_{0.02})_{5.05}O₁₅ was formed in a thickness of 0.2 µm on the epitaxial layer 3.

A mask pattern made of Ti having strips at a pitch of 0.4 µm and a thickness of 100 nm was formed on the overclad layer 9, and a reflective grating part 5 having a depth of 0.1 µm and a length of 1.8 mm was formed by a reactive ion etching with a CF₄+O₂ gas. The travelling direction of a light wave in the optical waveguide may be "a" axis direction.

The epitaxial film and the overclad layer were processed by the reactive ion etching to form a ridge-type structure having a width of 5 µm and a depth of 3 µm, and thereby a three dimensional wavelength-converting optical waveguide 3 was formed.

A transverse polarization ray was led into the wavelength-converting optical waveguide 3 as shown by an arrow 6. Consequently, it was found that the optical waveguide 3 was an optical waveguide having a single mode in a range of 811 nm to 878 nm. Then, the optical waveguide 3 and the overclad layer 9 were coated with a film 10 of tantalum oxide and a film heater 4 made of Ti was formed on the surface of the tantalum oxide film in a width of 20 µm, a thickness of 0.5 µm, and a length of 10 mm, whereby a ridge type-structure was obtained.

The thus obtained structure was cut out into chips for generating a second harmonic wave, each having a width of 2 mm and a length of 11 mm. Then, a semiconductor laser was directly led into the chip without through a lens. The power of the laser entering the optical waveguide was 80 mW when the output from the semiconductor laser was 100 mW. The oscillating wavelength of the semiconductor laser was fixed to the wavelength of the reflective wave in the wavelength-converting optical waveguide and stably oscillated at the wavelength of 856.2 nm. A reflectance at the reflective grating part was 12%.

Then, the film heater was heated by applying a voltage of 7 volt upon it and passing an electric current through it, thereby the phase-matched wavelength of the wavelength-converting optical waveguide could be successfully matched to the oscillating wavelength. Consequently, a second harmonic wave with the wavelength of 428.1 nm was obtained. The output power was 2 mW. As above mentioned, the device according to the present invention had excellent characteristics as a device for generating a second harmonic wave with a blue wavelength range.

As above mentioned, according to this invention, in the second harmonic wave-generation device for generating a second harmonic wave from a fundamental wave, the matching between the fundamental wave and the second harmonic wave can be maintained, and the phase-matched wavelength of the second harmonic wave can be controlled dynamically if the environmental temperature fluctuates.

## Claims

1. A second harmonic wave-generation device (1) comprising an optical waveguide (3) made of a lithium potassium niobate-lithium potassium tantalate solid solution single crystal for generating a second harmonic wave being an extraordinary ray from a fundamental wave being an ordinary ray in the wavelength-converting optical waveguide, **characterised in that** the device further comprises a reflective grating part (5) for fixing a wavelength of the fundamental wave entering the wavelength-converting optical waveguide, and a temperature controlling means (4) for controlling a temperature of at least the wavelength-converting optical waveguide.

2. A second harmonic wave-generation device as in claim 1, wherein the single crystal has a fundamental composition of K₃Li₂₋₂ₐ(Nb_{1-b}Ta_{b})_{5+5c}O_{15-a+12.5c}, and wherein, -0.5 ≤ a ≤ 0.625, 0 ≤ b ≤ 0.5, 0.8 ≤ (5-2a)/(5+5c) ≤ 1.2.

3. A second harmonic wave-generation device as in claim 1 or 2, wherein a film heater is formed as the temperature controlling means on the wavelength-converting optical waveguide.

4. A second harmonic wave-generation device as in claim 3, wherein the film heater is formed on the reflective grating part.

5. A second harmonic wave-generation device as in claim 3 or 4, wherein a dielectric layer is formed between the film heater and the wavelength-converting optical waveguide.

6. A second harmonic wave-generation device as in any one of claims 1 to 4, which further comprises an integral substrate (2) and wherein the wavelength-converting optical waveguide and the reflective grating part are formed on the substrate.

7. A second harmonic wave-generation device as in any one of claims 1 to 3, or 5, which further comprises a first substrate (21) and a second substrate (31), and wherein the reflective grating part is formed on the first substrate and the wavelength-converting optical waveguide and the temperature controlling means are formed on the second substrate.

## Patentansprüche

1. Vorrichtung (1) zur Erzeugung einer zweiten Harmonischen, umfassend einen Lichtwellenleiter (3), der aus einem Mischkristall-Einkristall aus Lithiumkaliumniobat und Lithiumkaliumtantalat hergestellt ist, zur Erzeugung einer zweiten Harmonischen, die ein außerordentlicher Strahl einer Grundwelle ist, welche ein ordentlicher Strahl in dem Wellenlängen umwandelnden Lichtwellenleiter ist, **dadurch gekennzeichnet, dass** die Vorrichtung weiters einen Reflexionsgitterteil (5) zum Festlegen der Wellenlänge der in den Wellenlängen umwandelnden Lichtwellenleiter eintretenden Grundwelle und ein Temperaturregelungsmittel (4) zum Regeln der Temperatur von zumindest dem Wellenlängen umwandelnden Lichtwellenleiter umfasst.

2. Vorrichtung zur Erzeugung einer zweiten Harmonischen nach Anspruch 1, worin der Einkristall die grundlegende Zusammensetzung von K₃Li₂₋₂ₐ (Nb_{1-b}Ta_{b})_{5+5c}O_{15-a+12,5c} aufweist und worin -0,5 ≤ a ≤ 0,625; 0 ≤ b ≤ 0,5; 0,8 ≤ (5 - 2a)/(5 + 5c) ≤ 1,2 gilt.

3. Vorrichtung zur Erzeugung einer zweiten Harmonischen nach Anspruch 1 oder 2, worin als das Temperaturregelungsmittel eine Folienheizvorrichtung auf dem Wellenlängen umwandelnden Lichtwellenleiter bereitgestellt ist.

4. Vorrichtung zur Erzeugung einer zweiten Harmonischen nach Anspruch 3, worin die Folienheizvorrichtung auf dem Reflexionsgitterteil ausgebildet ist.

5. Vorrichtung zur Erzeugung einer zweiten Harmonischen nach Anspruch 3 oder 4, worin eine dielektrische Schicht zwischen der Folienheizvorrichtung und dem Wellenlängen umwandelnden Lichtwellenleiter ausgebildet ist.

6. Vorrichtung zur Erzeugung einer zweiten Harmonischen nach einem der Ansprüche 1 bis 4, weiters umfassend ein einstückiges Substrat (2), worin der Wellenlängen umwandelnde Lichtwellenleiter und der Reflexionsgitterteil auf dem Substrat ausgebildet sind.

7. Vorrichtung zur Erzeugung einer zweiten Harmonischen nach einem der Ansprüche 1 bis 3 oder 5, weiters umfassend ein erstes Substrat (21) und ein zweites Substrat (31), worin der Reflexionsgitterteil auf dem ersten Substrat ausgebildet ist und der Wellenlängen umwandelnde Lichtwellenleiter und das Temperaturregelungsmittel auf dem zweiten Substrat ausgebildet sind.

## Revendications

1. Dispositif de génération de second harmonique (1) comprenant un guide d'onde optique (3) constitué d'un monocristal en solution solide de niobate de potassium lithium - tantalate de potassium lithium pour générer un second harmonique étant un rayon extraordinaire à partir d'une onde fondamentale étant un rayon ordinaire dans le guide d'onde optique de conversion de longueur d'onde, **caractérisé en ce que** le dispositif comprend en outre un élément de réseau réfléchissant (5) pour fixer une longueur d'onde de l'onde fondamentale entrant dans le guide d'onde optique de conversion de longueur d'onde, et un moyen de contrôle de la température (4) pour contrôler la température d'au moins le guide d'onde optique de conversion de longueur d'onde.

2. Dispositif de génération de second harmonique, tel que revendiqué dans la revendication 1, dans lequel le monocristal a une composition fondamentale K₃Li₂₋₂ₐ(Nb_{1-b}Ta_{b})_{5+5c}O_{15-a+12.5c}, dans lequel -0,5 ≤ a ≤ 0,625, 0 ≤ b ≤ 0,5, 0,8 ≤ (5-2a)/(5+5c) ≤ 1,2.

3. Dispositif de génération de second harmonique, tel que revendiqué dans les revendications 1 ou 2, dans lequel un élément chauffant de film est formé comme moyen de contrôle de la température sur le guide d'onde optique de conversion de longueur d'onde.

4. Dispositif de génération de second harmonique, tel que revendiqué dans la revendication 3, dans lequel l'élément chauffant de film est formé sur l'élément de réseau réfléchissant.

5. Dispositif de génération de second harmonique, tel que revendiqué dans les revendications 3 ou 4, dans lequel une couche diélectrique est formée entre l'élément chauffant de film et le guide d'onde optique de conversion de longueur d'onde.

6. Dispositif de génération de second harmonique, tel que revendiqué dans l'une quelconque des revendications 1 à 4, qui comprend en outre un substrat intégral (2) et dans lequel le guide d'onde optique de conversion de longueur d'onde et l'élément de réseau réfléchissant sont formés sur le substrat.

7. Dispositif de génération de second harmonique, tel que revendiqué dans l'une quelconque des revendications 1 à 3, ou 5, qui comprend en outre un premier substrat (21) et un second substrat (31), et dans lequel l'élément de réseau réfléchissant est formé sur le premier substrat et le guide d'onde optique de conversion de longueur d'onde et le moyen de contrôle de température sont formés sur le second substrat.
